# EUROPÄISCHE PATENTSCHRIFT

(11) **EP 2 887 462 B1**
(45) Veröffentlichungstag und Bekanntmachung des Hinweises auf die Patenterteilung: **03.03.2021**
(21) Anmeldenummer: 13199056.6
(22) Anmeldetag: 20.12.2013
(51) Int. Cl.: H01R 13/41, H02K 3/52

(54) **Elektrisches Kfz-Nebenaggregat**
Electric motor vehicle auxiliary generator
Agrégat auxiliaire électrique d'un véhicule

(43) Veröffentlichungstag der Anmeldung: 24.06.2015
(73) Patentinhaber: Pierburg Pump Technology GmbH, 41460 Neuss (DE)
(72) Erfinder: Schwabbauer, Frank, 04746 Hartha (DE); Zill, Mathias, 01683 Nossen (DE); Suswedyk, Martin, 01662 Meissen (DE)
(74) Vertreter: terpatent Patentanwälte ter Smitten Eberlein-Van Hoof Rütten Daubert

(56) Entgegenhaltungen:
- EP-A2- 2 056 410
- WO-A1-2010/108709
- DE-A1- 19 857 954
- DE-A1-102008 054 343

## Beschreibung

Die Erfindung bezieht sich auf ein elektrisches Kfz-Nebenaggregat mit einem elektrischen Antriebsmotor und einem Antriebselement, das durch den Antriebsmotor angetrieben wird.

Unter einem elektrischen Kfz-Nebenaggregat wird vorliegend jedes Aggregat in einem Kraftfahrzeug verstanden, das nicht unmittelbar dem Antrieb des Kraftfahrzeugs (Kfz) dient, sondern antriebfremde Aufgaben übernimmt. Beispiele für derartige Kfz-Nebenaggregate sind elektrische Fluidpumpen, elektrische Abgasrückführungs-Ventile, elektrische Steiler etc. Sowohl bei Kraftfahrzeugen, die durch einen Verbrennungsmotor angetrieben werden, als auch bei Kraftfahrzeugen, die durch einen Elektromotor angetrieben werden, sind die elektrischen Kfz-Nebenaggregate während des Betriebes des Kraftfahrzeuges erheblichen Belastungen ausgesetzt, insbesondere thermischen und mechanischen Belastungen. Insbesondere die mechanischen Belastungen, beispielsweise Schläge, Stöße und Vibrationen, können dazu führen, dass sich mechanische Verbindungen zwischen Bauteilen des Kfz-Nebenaggregates lösen können.

Als elektrischer Antriebsmotor für Nebenaggregate werden häufig elektronisch kommutierte Antriebsmotoren verwendet, da die Kommutierung hierbei keinem mechanischen Verschleiß unterliegt. Der Motorstator wird hierbei unter anderem von einem elektrisch nicht-leitenden Kunststoff-Grundkörper gebildet, der mehrere Stadttorspulen trägt. In den Kunststoff-Grundkörper sind mehrere im Wesentlichen axial ausgerichtete und elektrisch leitende Kontaktfahnen eingesteckt, die zum einen mit Anschlussleitungen der Motorspulen verbunden sind und zum anderen mit einer elektronischen Motorsteuerung elektrisch verbunden sind, die die Motorspulen elektrisch speist. Die Motorsteuerung kann beispielsweise auf einer Steuerungsplatine angeordnet sein, die in einer Querebene des Antriebsmotors angeordnet ist. DE 19857954 A1 offenbart einen Motor-Stator mit Kontaktfahnen, die eingepresst oder eingegossen sind.

Die elektrisch leitende Kontaktfahne besteht meist aus einem elektrisch leitenden Metallblech, und weist an ihrem proximalen Ende einen Steckkörper auf, der in den Kunststoff-Grundkörper eingesteckt Ist und mehr oder weniger mit Reibschluss in dem Grundkörper fixiert ist. Es sind auch Steckkörper bekannt, die an ihren lateralen Schmalseiten jeweils Zähne aufweisen, um die Fixierung der Kontaktfahnen in dem Kunststoff-Grundkörper zu verbessern. Diese kommt insbesondere dadurch zu Stande, dass der geringem Maße elastische Kunststoff des Grundkörpers in die Täler zwischen zwei Zähnen nach der Montage geringfügig hineinragt.

Allerdings hat sich herausgestellt, dass sich eine derartige Fixierung der Kontaktfahnen in dem Kunststoff-Grundkörper des Motorstators durch die mechanische Beanspruchung im Laufe eines Nebenaggregat-Lebens mechanisch lockern oder sogar lösen kann, so dass insbesondere die Anschlussleitungen der Motorspulen sich ebenfalls lösen, abreißen oder brechen können.

Aufgabe der Erfindung vor diesem Hintergrund ist es, ein elektrisches Kfz-Nebenaggregat mit einer verbesserten und einfach montierbaren Fixierung der Kontaktfahnen in dem Grundkörper zu schaffen.

Diese Aufgabe wird erfindungsgemäß gelöst mit einem elektrischen Kfz-Nebenaggregat mit den Merkmalen des Anspruchs 1.

Das erfindungsgemäße elektrische Kfz-Nebenaggregat weist Kontaktfahnen auf, die jeweils aus einem flachen geplanten Steckkörper gebildet sind, der an seinen beiden lateralen Schmalseiten jeweils mehrere Zähne aufweist. Die Zahnspitzen der Zähne einer Schmalseite haben jeweils nicht den gleichen Abstand zu der Mittellinie des Steckkörpers, sondern dieser Abstand zu Mittellinie wird zum distalen Ende der Steckkörper hin jeweils sukzessive geringer, und zwar derart, dass die virtuelle Scheitellinie, die jeweils die Zahnspitzen der Zähne im Bereich der Zahnscheitel miteinander verbindet, zu der Mittellinie nicht parallel ist, sondern mindestens einen Winkel a/2 von größer als 0,5° hat. Auf diese Weise haben die beiden virtuellen Scheitellinien, die jeweils die Zahnspitzen der Zähne beider Schmalseiten miteinander verbinden, zueinander einen Winkel a größer als 1,0°.

Beim Einstecken des Steckkörpers in den Kunststoff-Grundkörper des Motorstators haben die vorauseilenden Zähne also eine geringere absolute Zahnhöhe im Verhältnis zu Mittellinie, als die nacheilenden Zähne. Hierdurch sitzen alle nacheilenden Zähne schließlich fester in dem Kunststoff-Grundkörper, weil der Kunststoff im Bereich der nacheilenden Zähne durch die zuvor vorbeilaufenden voreilenden Zähne bei der Montage geringer deformiert wurde als dies bei Zähnen mit zueinander parallelen virtuellen Scheitellinien der Fall wäre. Versuche haben ergeben und bestätigt, dass hierdurch die mechanische Festigkeit der Fixierung der Steckkörper in dem Kunststoff-Grundkörper spürbar verbessert werden konnte. Alle flachen Steckkörper sind mit ihrer Grundebene radial ausgerichtet.

Besonders bevorzugt ist der Winkel a zwischen den beiden virtuellen Scheitellinien größer als 1,5°, und beträgt besonders bevorzugt ungefähr 2,0°.

Vorzugsweise sind die Zähne der beiden Schmalseiten jeweils symmetrisch zueinander bezüglich einer winkelhalbierenden Mittellinie ausgebildet, so dass auch die korrespondierenden Scheitellinien symmetrisch bezüglich der winkelhalbierenden Mittellinie zueinander sind.

Vorzugsweise sind alle Kontaktfahnen jeweils identisch zueinander ausgebildet und weist jede Kontaktfahne jeweils eine Leitungstasche auf, in der jeweils mindestens eine Motorspulen-Anschlussleitung elektrisch leitend fixiert ist. Die Anschlussleitung kann beispielsweise in der Leitungstasche verklemmt sein, wodurch eine sichere mechanische und elektrische Verbindung zwischen der Anschlussleitung und der Kontaktfahne geschaffen wird.

Besonders bevorzugt sind die Steckkörper derart ausgerichtet, dass die Leitungstasche radial außenseitig orientiert ist, so dass die daran fixierte Anschlussleitung einen möglichst kurzen und möglichst wenig gebogenen Verlauf einnehmen kann.

Vorzugsweise weist der Steckkörper an einer Schmalseite mindestens drei, und besonders bevorzugt mindestens fünf Zähne auf. Da die Kontaktfahnen bevorzugt in axialer Richtung in den Grundkörper eingesteckt sind, wird durch eine Vielzahl von Steckkörper-Zähnen insbesondere die axiale Fixierung der Kontaktfahnen in dem Kunststoff-Grundkörper verbessert und insbesondere in Bezug auf Vibrationen robuster gemacht.

Gemäß einer bevorzugten Ausgestaltung sind die Zähne im Bereich ihrer Scheitelpunkte bzw. ihrer Zahnspitze jeweils stumpf ausgebildet, wobei der Radius r der Zahnspitzen jeweils mindestens 1/4 der Zahnhöhe h beträgt. Durch die relativ stumpfe Gestaltung der Zahnspitzen wird beim Einstecken der Kontaktfahnen-Steckkörper in den Grundkörper-Kunststoff ein Einschneiden bzw. ein Materialabtrag des Kunststoffmaterials vermieden. Hierdurch wird die Festigkeit des Sitzes des montierten Steckkörper in dem Grundkörper dauerhaft verbessert.

Im Folgenden wird ein Ausführungsbeispiel der Erfindung näher erläutert. Es zeigen:
Figur 1 schematisch ein elektrisches Kfz-Nebenaggregat mit einem elektrischen Antriebsmotor und einem Antriebselement, das durch den Antriebsmotor angetrieben wird,
Figur 2 einen Motorstator des Antriebsmotors der Figur 1 in perspektivischer Ansicht, und
Figur 3 einen Steckkörper einer Kontaktfahne des Motorstators der Figur 2.

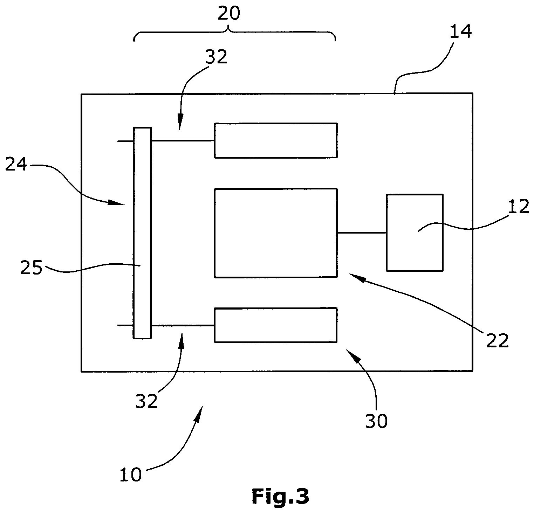

In der Figur 3 ist schematisch ein elektrisches Kfz-Nebenaggregat 10 dargestellt, das beispielsweise als elektrisches Abgasrückführungsventil ausgebildet sein kann. Das Kfz-Nebenaggregat 10 weist in einem Gehäuse 14 einen elektrischen Antriebsmotor 20 auf, durch den ein Antriebselement 12, beispielsweise ein Zahnrad-Ritzel, das Teil eines Untersetzungsgetriebes ist, angetrieben wird. Das Untersetzungsgetriebe wiederum kann schließlich einen Ventilkörper antreiben, der nicht dargestellt ist.

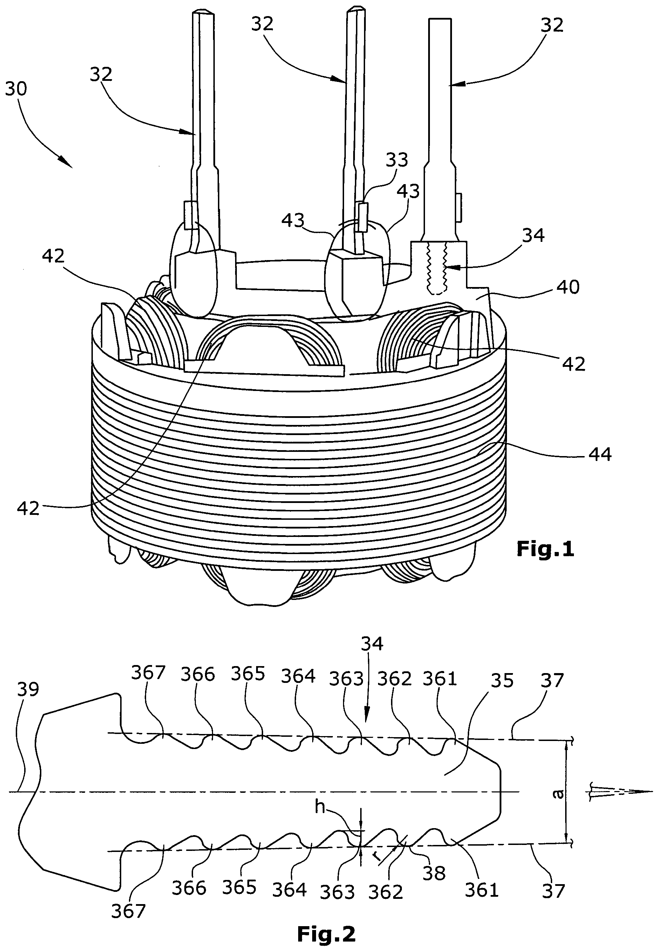

Der elektrische Antriebsmotor 20 weist einen permanentmagnetisch erregten Motorrotor 22, der mit dem Antriebselement 12 drehfest verbunden ist, und einen feststehenden Motorstator 30 auf, der in der Figur 1 in perspektivischer Ansicht dargestellt ist. Der Motorstator 30 weist unter anderem mehrere Statorspulen 42 auf, die über axial ausgerichtete Kontaktfahnen 32 elektrisch mit einer Motorsteuerung 24 verbunden sind. Die Motorsteuerung 24 wird im Wesentlichen von einer Leiterplatte 25 und darauf angeordneten elektronischen Bauelementen gebildet.

Der in der Figur 1 dargestellte Motorstator 30 weist radial innen einen elektrisch nicht-leitenden Kunststoff-Grundkörper 40 auf, der die vorliegend sechs Statorspulen 42 trägt. Außenseitig ist der Grundkörper 40 mit den Stadttorspulen 42 umgeben von einem magnetisch leitenden Rückschlussring 44. In den Kunststoff-Grundkörper 40 sind an seiner der Motorsteuerung 24 zugewandten Seite drei Kontaktfahnen 32 aus elektrisch leitendem Blech angeordnet. Die Kontaktfahnen 32 sind flach ausgebildet. An ihrem dem Grundkörper zugewandten Längsende weisen die Kontaktfahnen 32 jeweils einstückig einen Steckkörper 34 auf, der vollständig in den Kunststoff-Grundkörper 40 eingesteckt ist.

An einer Schmalseite weist jeder Steckkörper 32 jeweils eine Leitungstasche 33 auf, in die jeweils zwei Motorspulen-Anschlussleitungen 43 eingelegt und in dieser mechanisch verklemmt sind, so dass eine sichere elektrische Verbindung zwischen den Anschlussleitungen 43 und der Kontaktfahne 32 dauerhaft hergestellt ist. Die drei flachen Steckkörper 32 stehen mit ihrer Grundebene exakt radial ausgerichtet, und zwar derart, dass die Leitungstaschen 33 radial außen stehen.

Der Steckkörper 34 ist in der Figur 2 detailliert dargestellt. Der Steckkörper 34 weist an seinen beiden lateralen Schmalseiten jeweils sieben Zähne 361-367 auf, die in gleichbleibenden Abständen aufeinander folgend angeordnet sind. Die Zähne 361-367 weisen jeweils im Bereich ihrer Scheitelpunkte Zahnspitzen 38 auf, wobei der Abstand der Zahnspitzen 38 zu einer Symmetrie- bzw. Mittellinie 39 des Steckkörpers 34 zum distalen Steckkörper-Ende hin sukzessive abnimmt. Die Scheitellinie 37, die die Zahnspitzen 38 aller Zähne 361-367 miteinander verbindet, liegt daher nicht parallel zu der Mittellinie 38, sondern leicht geneigt zu dieser. Die beiden virtuellen Scheitellinien 37 der beiden Zahnreihen schließen miteinander einem Winkel a von ungefähr 2,0° ein.

Die Zahnspitzen 38 aller Zähne 361-367 sind nicht scharfkantig oder spitz, sondern sind stumpf und abgerundet ausgebildet. Der Radius r jeder Zahnspitze 38 beträgt vorliegend ungefähr 1/2 der Zahnhöhe h zwischen einem Tal zwischen zwei Zähnen der Zahnspitze 38. Auf diese Weise wird vermieden, dass beim Einstecken des gezahnten Steckkörpers 34 in den Kunststoff-Grundkörper 40 Kunststoff abgetragen bzw. entfernt wird.

Der Kunststoff-Grundkörper 40 ist im Spritzguss gefertigt worden und weist vor der Montage der Kontaktfahnen 32 entsprechende axiale Taschen auf, in die die Steckkörper 34 eingesteckt werden. Diese Taschen sind sowohl an ihrer Schmalseite als auch an ihrer Breitseite kleiner als die korrespondierenden umhüllenden Außenabmessungen des Steckkörpers 34. Zur Montage der Kontaktfahnen 32 an dem Grundkörper 40 werden die Steckkörper 34 mit einer entsprechenden Kraft in die betreffenden Grundkörper-Taschen eingesteckt. Die Breite der Grundkörper-Taschen ist hierbei zunächst nicht größer als die Breite des Steckkörpers 34 im Bereich der Täler zwischen zwei Zähnen 361,362 am distalen Längsende des Steckkörpers 34, Beim Einstecken wird der Kunststoff des Grundkörpers größtenteils elastisch verdrängt, so dass der Grundkörper-Kunststoff in der Montageposition des Steckkörpers 34 in dem Grundkörper 40 in die Täler zwischen den Zähnen 361-367 hineinragt. Auf diese Weise wird dauerhaft eine feste und zuverlässige Fixierung der Kontaktfahnen 32 an dem Grundkörper 40 realisiert.

## Patentansprüche

1. Elektrisches Kfz-Nebenaggregat (10) mit einem elektrischen Antriebsmotor (20) und einem Antriebselement (12), das durch den Antriebsmotor (20) angetriebenen wird, wobei
der Antriebsmotor (20) einen Motorrotor (22) und einen Motorstator (30) aufweist,
der Motorstator (30) einen elektrisch nicht-leitenden Kunststoff-Grundkörper (40) aufweist, der mehrere Statorspulen (42) trägt und in den mehrere elektrisch leitende Kontaktfahnen (32) eingesteckt sind, und
die Kontaktfahnen (32) elektrisch mit einer elektronischen Motorsteuerung (24) und mit Anschlussleitungen (43) der Motorspulen (42) verbunden sind,
**dadurch gekennzeichnet, dass**
jede Kontaktfahne (32) einen flachen gezahnten Steckkörper (34) aufweist, der an seinen beiden lateralen Schmalseiten jeweils mehrere Zähne (361-367) aufweist,
die beiden virtuellen Scheitellinien (37), die jeweils die Zahnspitzen (38) der Zähne (361-367) miteinander verbinden, zueinander einen Winkel a größer 1,0° haben, so dass der Abstand der Zahnspitzen (38) zu einer Mittellinie des Steckkörpers (34) zum distalen Ende hin sukzessive geringer wird, und
die flachen Steckkörper (34) mit ihrer Grundebene radial ausgerichtet sind.

2. Elektrisches Kfz-Nebenaggregat (10) nach Anspruch 1, wobei der Winkel a zwischen den Scheitellinien (37) größer als 1,5° ist.

3. Elektrisches Kfz-Nebenaggregat (10) nach einem der vorangegangenen Ansprüche, wobei die Zähne (361-367) sowie die sie verbindenden Scheitellinien (37) symmetrisch zueinander sind bezüglich einer winkelhalbierenden Mittellinie (39).

4. Elektrisches Kfz-Nebenaggregat (10) nach einem der vorangegangenen Ansprüche, wobei die Kontaktfahnen (32) jeweils identisch zueinander ausgebildet sind.

5. Elektrisches Kfz-Nebenaggregat (10) nach einem der vorangegangenen Ansprüche, wobei jede Kontaktfahne (32) eine Leitungstasche (33) aufweist, in der jeweils eine Motorspulen-Anschlussleitung (43) elektrisch leitend fixiert ist.

6. Elektrisches Kfz-Nebenaggregat (10) nach einem der vorangegangenen Ansprüche, wobei mindestens drei, und besonders bevorzugt mindestens fünf Zähne (361-367) an einer Schmalseite angeordnet sind.

7. Elektrisches Kfz-Nebenaggregat (10) nach einem der vorangegangenen Ansprüche, wobei die Zähne (361-367) im Bereich ihrer Scheitelpunkte jeweils stumpf ausgebildet sind, wobei der Radius r der Zahnspitze (38) mindestens 1/4 der Zahnhöhe h beträgt.

## Claims

1. Electric motor vehicle auxiliary unit (10) comprising an electric drive motor (20) and a drive element (12) driven by the drive motor (20),
wherein the drive motor (20) comprises a motor rotor (22) and a motor stator (30),
wherein the motor stator (30) comprises an electrically non-conductive plastic base body (40) which carries a plurality of stator coils (42) and into which several electrically conductive contact tabs (32) are inserted, and
the contact tabs (32) are electrically connected with an electronic motor control (24) and with connecting lines (43) of the motor coils (42),
**characterized in that**
each contact tab (32) comprises a flat, toothed plug-in body (34) having a plurality of teeth (361-367) on each of its two lateral narrow sides,
the two virtual apex lines (37), which each connect the tooth tips (38) of the teeth (361-367), have an angle a greater than 1.0° with respect to one another, so that the distance of the tooth tips (38) to a center line of the plug-in body (34) gradually decreases towards the distal end, and
the flat plug-in bodies (34) are radially aligned with their base plane.

2. Electric motor vehicle auxiliary unit (10) according to claim 1, wherein the angle a between the vertex lines (37) is larger than 1.5°.

3. Electric motor vehicle auxiliary unit (10) according to one of the preceding claims, wherein the teeth (361-367) as well as the apex lines (37) connecting the same are symmetrical to one another with respect to a bisecting center line (39).

4. Electric motor vehicle auxiliary unit (10) according to one of the preceding claims, wherein the contact tabs (32) are each configured to be identical to one another.

5. Electric motor vehicle auxiliary unit (10) according to one of the preceding claims, wherein each contact tab (32) has a line pocket (33) in which a respective motor coil connection line (43) is fixed in an electrically conductive manner.

6. Electric motor vehicle auxiliary unit (10) according to one of the preceding claims, wherein at least three, and, as is particularly preferred, at least five teeth (361-367) are arranged on a narrow side.

7. Electric motor vehicle auxiliary unit (10) according to one of the preceding claims, wherein the teeth (361-367) are each blunt in the region of their apexes, wherein the radius r of the tooth tip (38) is at least 1/4 of the tooth height h.

## Revendications

1. Unité auxiliaire électrique (10) pour véhicule comprenant un moteur d'entrainement électrique (20) et un élément d'entrainement (12) entrainé par le moteur d'entrainement (20),
le moteur d'entrainement (20) comprenant un rotor de moteur (22) et un stator de moteur (30),
le stator de moteur (30) comprenant un corps de base (40) en plastique électriquement non conducteur qui porte plusieurs bobines de stator (42) et dans lequel plusieurs languettes de contact (32) électriquement conductrices sont insérées, et
les languettes de contact (32) sont électriquement connectées avec une commande de moteur électronique (24) et sont connectées aux lignes de connexion (43) des bobines de moteur (42),
**caractérisée en ce que** chaque languette de contact (32) comprend un corps d'enfichage (34) plat et denté qui présente plusieurs dents (361-367) sur chacun de ses deux côtés étroits latéraux,
les deux lignes de sommet (37) virtuelles, qui relient chacune les pointes des dents (38) des dents (361-367), présentent un angle supérieur à 1,0° l'une par rapport à l'autre, de sorte que la distance des pointes des dents (38) d'une ligne centrale du corps d'enfichage (34) décroît successivement vers l'extrémité distale, et
les corps d'enfichage (34) plats sont radialement alignés avec leur plan de base

2. Unité auxiliaire électrique (10) pour véhicule selon la revendication 1, dans laquelle l'angle a entre les lignes de sommet (37) est supérieur à 1,5°.

3. Unité auxiliaire électrique (10) pour véhicule selon l'une quelconque des revendications précédentes, dans laquelle les dents (361-367) et les lignes de sommet (37) les reliant sont symétriques l'une à l'autre par rapport à une ligne médiane bissectrice (39).

4. Unité auxiliaire électrique (10) pour véhicule selon l'une quelconque des revendications précédentes, dans laquelle les languettes de contact (32) sont formées chacune pour être identiques les unes aux autres.

5. Unité auxiliaire électrique (10) pour véhicule selon l'une quelconque des revendications précédentes, dans laquelle chaque languette de contact (32) comprend une poche de ligne (33) dans laquelle une ligne de connexion de bobine de moteur respective (43) est fixée de manière électriquement conductrice.

6. Unité auxiliaire électrique (10) pour véhicule selon l'une quelconque des revendications précédentes, dans laquelle au moins trois, et de manière particulièrement préférée au moins cinq dents (361-367) sont disposées sur un côté étroit.

7. Unité auxiliaire électrique (10) pour véhicule selon l'une quelconque des revendications précédentes, dans laquelle les dents (361-367) sont chacune obtuses au niveau de leurs sommets, le rayon r de la pointe de dent (38) étant au moins 1/4 de la hauteur de dent h.
